# EUROPÄISCHE PATENTSCHRIFT

(11) **EP 3 649 841 B1**
(45) Veröffentlichungstag und Bekanntmachung des Hinweises auf die Patenterteilung: **12.04.2023**
(21) Anmeldenummer: 19202404.0
(22) Anmeldetag: 10.10.2019
(51) Int. Cl.: A01B 71/04, A01B 49/02

(54) **LANDWIRTSCHAFTLICHE MASCHINE ZUR BODENBEARBEITUNG**
AGRICULTURAL MACHINE FOR TREATING SOIL
MACHINE AGRICOLE DESTINÉE AU TRAITEMENT DU SOL

(30) Priorität: 08.11.2018 DE 102018219063
(43) Veröffentlichungstag der Anmeldung: 13.05.2020
(73) Patentinhaber: Horsch Maschinen GmbH, 92421 Schwandorf (DE)
(72) Erfinder: HORSCH, Philipp, 92421 Schwandorf (DE); MECKL, Florian, 92421 Schwandorf (DE)
(74) Vertreter: Benninger, Johannes

(56) Entgegenhaltungen:
- EP-A1- 2 965 603
- DE-U1- 20 012 666
- DE-U1- 29 810 404
- US-B2- 7 465 099

## Beschreibung

Die vorliegende Erfindung betrifft eine landwirtschaftliche Maschine zur Bodenbearbeitung mit den Merkmalen des Oberbegriffs des unabhängigen Anspruchs 1.

Eine derartige landwirtschaftliche Maschine zur Bodenbearbeitung ist durch die EP 2 965 603 A1 beschrieben. Diese landwirtschaftliche Maschine ist als Bodenbearbeitungsgerät bspw. in Form einer Scheibenegge ausgebildet. Das Bodenbearbeitungsgerät umfasst einen Zentralrahmen mit beidseitig daran verschwenkbar angeordneten Maschinensektionen. Die Maschinensektionen umfassen jeweils einen Tragrahmen mit daran angeordneten und Bodenbearbeitungswerkzeuge tragenden Längsträgern. Die Längsträger sind mittels zumindest zweier beabstandet zueinander angeordneter Drehlager am Tragrahmen angeordnet. Die Drehlager umfassen jeweils einen am Längsträger befestigten Innenlagering und einem mit dem Innenlagering in verdrehbar gelagerter Weise zusammenwirkenden und mit dem Tragrahmen verbundenen Außenlagerring. Zur Fixierung und axialen Sicherung des Außenlagerings am Innenlagering sind dem Außenlagering zueinander fixierende Sicherungselemente zugeordnet. Insbesondere sind die Sicherungselemente mit dem Außenlagering über als Schrauben ausgebildete Befestigungselemente in lösbarer Weise verbunden.

Da bei derartiger Ausführungsform der Außenlagering des Drehlagers unmittelbar auf der Außenmantelfläche des Innenlagerings aufliegt, unterliegen die sich daraus ergebenden Kontaktflächen zwischen Außenlagering und Innenlagering beim Verdrehen des Tragrahmens einem ausgeprägten Verschleißprozess. Da der Innenlagering und der Außenlagering unmittelbar aufeinanderliegen, müssen bei Verschleißerscheinungen sowohl der Innenlagering als auch der Außenlagering regelmäßig gewechselt und/oder ausgetauscht werden, was relativ hohe Kosten und einen erhöhten Wartungsaufwand verursachen.

Angesichts der im Stand der Technik identifizierten Nachteile liegt der Erfindung daher die Aufgabe zugrunde, eine landwirtschaftliche Maschine zur Bodenbearbeitung zur Verfügung zu stellen, bei welcher diese Nachteile vermieden und zumindest weitgehend reduziert werden können. Insbesondere soll bei der erfindungsgemäßen und nachfolgend beschriebenen landwirtschaftlichen Maschine zur Bodenbearbeitung die Lebensdauer und/oder die Standzeit solcher Drehlager sowie deren Komponenten erhöht werden. Darüber hinaus soll die Zugänglichkeit zu den das Drehlager bildenden Komponenten und deren Montage bzw. deren Austausch vereinfacht werden.

Diese Aufgaben der Erfindung werden durch eine landwirtschaftliche Maschine zur Bodenbearbeitung mit den Merkmalen des unabhängigen Anspruchs 1 gelöst. Vorteilhafte Ausgestaltungen und Weiterbildungen der Erfindung sind in den jeweils abhängigen Ansprüchen angegeben.

Die Erfindung betrifft eine landwirtschaftliche Maschine zur Bodenbearbeitung, insbesondere ein Bodenbearbeitungsgerät. Die landwirtschaftliche Maschine umfasst einen Maschinenrahmen mit zumindest zwei, vorzugsweise parallel zueinander und beabstandet voneinander angeordneten Längsträgern sowie wenigstens einen Querträger mit daran befestigten und/oder gelagerten Bodenbearbeitungsgeräten. Bei den Bodenbearbeitungsgeräten kann es sich beispielsweise um Säschare, Zinkenschare, Schneidscheiben oder dergleichen handeln. Die Bodenbearbeitungswerkzeuge können insbesondere jeweils über einen Tragarm an dem zumindest einen Querträger befestigt und/oder gelagert sein, so dass sie vom über dem Boden befindlichen Querträger zum Boden reichen. Zur Lagerung der Bodenbearbeitungswerkzeuge an dem zumindest einen Querträger können unterschiedlich ausgebildete Aufhängungsvorrichtung und/oder Lagerungen, wie bspw. Gummischnurlagerung oder dergleichen denkbar sein. Insbesondere können die Bodenbearbeitungsgeräte regelmäßig beabstandet zueinander entlang der Längserstreckung des zumindest einen Querträgers angeordnet sein.

Der wenigstens eine Querträger ist quer zu einer Fahrtrichtung der landwirtschaftlichen Maschine mittels zumindest zwei zueinander beabstandeten Drehlagern an den Längsträgern zumindest teilweise um seine Längsachse verdrehbar gelagert. Diese Verdrehbarkeit des zumindest einen Querträgers kann durch die zumindest zwei zueinander beabstandeten Drehlagern vorgegeben bzw. ermöglicht werden. Die zumindest zwei Drehlager sind vorzugsweise als Gleitlager ausgebildet.

Bei dem wenigstens einen Querträger kann es sich beispielsweise um ein Rohr mit einem quadratischen oder kreisförmigen Querschnitt handeln. Alternativ kann der zumindest eine Querträger als Welle ausgebildet sein, welche aus einem Vollmaterial gebildet ist.

Außerdem ist es denkbar, dass die landwirtschaftliche Maschine zumindest zwei Querträger oder auch mehrere parallel zueinander unter hintereinander angeordnete Querträger umfasst, an welchen Querträgern jeweils unterschiedliche Bodenbearbeitungswerkzeuge befestigt und/oder gelagert sind. Die zumindest zwei Querträger oder die mehreren Querträger können jeweils in Fahrtrichtung der landwirtschaftlichen Maschine hintereinander sowie beabstandet angeordnet und an den Längsträgern jeweils mittels Drehlagern gelagert sein. Die Bodenbearbeitungswerkzeuge können dabei in Fahrtrichtung versetzt hintereinander an den jeweils zumindest zwei Querträgern befestigt und/oder gelagert sein. Die zumindest zwei Querträger oder mehreren Querträger können jeweils mittels zumindest zwei zueinander beabstandet angeordneten Drehlagern am zumindest einen Längsträger zumindest teilweise um ihre Längsachse verdrehbar gelagert sein. Die zumindest zwei Querträger oder mehreren Querträger können jeweils unabhängig voneinander um ihre Längsachse verdreht werden oder gemeinsam um ihre Längsachse verdreht werden.

Die mindestens zwei Drehlager jedes Querträgers umfassen jeweils zumindest einen dem Querträger zugeordneten Innenring oder mindestens ein dem Querträger zugeordnetes Innenringsegment und einen dem Längsträger zugeordneten ein- oder mehrteilig ausgebildeten Außenring oder ein oder mehrere dem Längsträger zugeordnete Außenringsegmente, wobei der Innenring und der Außenring bzw. die Innen- und Außenringsegmente jeweils zueinander verdrehbar ausgebildet sind. Dabei ist es vorgesehen, dass jeweils zwischen dem Innenring und dem Außenring oder zwischen dem Innenringsegment und dem Außenringsegment zumindest abschnittsweise zumindest ein Zwischenelement vorgesehen und/oder angeordnet ist.

Insbesondere kann es sich hierbei um mindestens ein lasttragendes und ein Bestandteil des Drehlagers bildendes Zwischenelement handeln, das bei jedem der vorhandenen Drehlager zwischen dem Innenring und dem Außenring oder zwischen dem Innenringsegment und dem Außenringsegment vorgesehen und/oder angeordnet ist, und das zudem vom Drehlager trennbar und/oder auswechselbar ausgebildet ist.

Insbesondere kann das zumindest eine Zwischenelement jeweils zumindest abschnittsweise zwischen den Kontakt- und/oder Berührungsflächen zwischen Innenring und Außenring vorgesehen und/oder angeordnet sein, d.h. der Innenring und der Außenring stehen damit zumindest abschnittsweise nicht unmittelbar bzw. nicht direkt in Oberflächenkontakt, sondern sind durch das Zwischenelement voneinander separiert. Auf diese Weise stehen zumindest Abschnitte des Innenrings und des Außenrings über das wenigstens eine Zwischenelement in Oberflächenkontakt.

Da der Innenring und der Außenring jeweils aufgrund des wenigstens einen Zwischenelements nicht unmittelbar aufeinanderliegen, wie es bisher aus dem Stand der Technik bekannt ist, kann der Verschleiß zwischen Innenring und Außenring reduziert werden. Insofern kann es sich bei dem zumindest einen Zwischenelement um ein Verschleißelement handelt, welches nicht nur als lasttragendes Lagerelement fungiert, sondern das die bei Verdrehen und/oder bei Rotation des Innenrings gegenüber dem Außenring und umgekehrt entstehenden Reib- und Gleitkräfte bevorzugt aufnimmt. Aufgrund des zumindest einen zwischen Innenring und Außenring zumindest abschnittsweise angeordneten Zwischenelements können sowohl der jeweilige Innenring als auch der jeweilige Außenring der zumindest zwei Drehlager vor Verschleiß geschützt werden.

Bei Wartungsarbeiten wäre somit vorerst zumindest das zumindest eine Zwischenelement auszutauschen, während hingegen ein Austausch der gesamten Drehlagerung, umfassend den mit dem Querträger verbundenen Innenring und den mit dem jeweiligen Längsträger verbundenen Außenring nicht erforderlich ist, und dies im deutlichen Gegensatz zu den bisher aus dem Stand der Technik bekannten Drehlagerungen. Dadurch können insbesondere Kosten eingespart sowie auch der Zeitaufwand bei Wartungsarbeiten reduziert werden, da nicht das gesamte Drehlager ausgetauscht werden muss.

Weiter kann es vorgesehen sein, dass der Innenring dem zumindest einen Querträger unverdrehbar zugeordnet ist. Vorzugsweise ist der Innenring der zumindest zwei Drehlager jeweils auf dem zumindest einen Querträger unverdrehbar aufgesteckt und/oder aufgeschoben, d.h. der Innenring kann vorzugsweise eine Durchgangsöffnung umfassen, welche korrespondierend zum Außenumfang des zumindest einen Querträgers ausgebildet ist, d.h. mittels die Durchgangsöffnung kann der Querträger vorzugsweise zumindest abschnittsweise von dem Innenring der zumindest zwei Drehlager aufgenommen werden. Ebenso möglich sind drehfeste und/oder stoffliche Verbindungen des Innenrings mit dem Querträger, die etwa durch Schweißverbindungen gebildet sein können.

Es kann vorgesehen sein, dass das zumindest eine Zwischenelement aus einem Material mit erhöhter Verschleiß- und/oder Abriebfestigkeit als das Material des Innenrings und/oder des Außenrings ausgebildet ist. Beispielsweise kann es vorgesehen sein, dass das zumindest eine Zwischenelement aus wenigstens einem Kunststoffmaterial oder aus wenigstens einem metallischen Material mit erhöhter Abriebfestigkeit gebildet ist. Hierbei eignen sich zahlreiche Stahllegierungen als Materialien für das Zwischenelement.

Bei dem wenigstens einen Kunststoffmaterial kann es sich vorzugsweise um jeden Kunststoff handeln, welcher gute Reibungs- und Verschleißeigenschaften und/oder Gleitreibeigenschaften aufweist. Insbesondere kann der wenigstens eine Kunststoff aus PTFE, PEEK, PPS oder dergleichen gebildet sein.

Auch wäre es denkbar, das wenigstens eine Kunststoffmaterial mit Additiven zu versehen, um die Reibungseigenschaften wie beispielswiese die Abriebfestigkeit und/oder die Verschleißbeständigkeit zu erhöhen und/oder zu verbessern.

Es kann jedoch im Gegensatz zur zuvor beschriebenen Variante auch vorgesehen sein, dass das zumindest eine Zwischenelement aus einem Material mit gegenüber den Materialien des Innenrings und/oder des Außenrings reduzierter Verschleiß- und/oder Abriebfestigkeit ausgebildet ist. Beispielsweise kann es vorgesehen sein, dass das zumindest eine Zwischenelement aus wenigstens einem Kunststoffmaterial oder aus wenigstens einem metallischen Material mit guten Gleiteigenschaften, aber reduzierter Abriebfestigkeit gebildet ist. Als geeignetes Gleitlagermaterial für das Zwischenelement kann bspw. Bronze in Frage kommen; auch andere Legierungen wie etwa entsprechend behandelte Stahllegierungen kommen hierfür in Frage.s

Bei dem wenigstens einen Kunststoffmaterial kann es sich somit vorzugsweise um jeden Kunststoff handeln, welcher gute Reibungs- und/oder Gleitreibeigenschaften aufweist, während seine Verschleißeigenschaften einen bewussten Verschleiß oder Materialabtrag über der Zeit vorsehen können. Insbesondere kann der wenigstens eine Kunststoff aus PTFE, PEEK, PPS oder dergleichen gebildet sein.

Andererseits ist es denkbar, dass für das Zwischenelement eingesetzte Kunststoffmaterial mit Additiven zu versehen, um die Reibungseigenschaften wie beispielswiese die Abriebfestigkeit und/oder die Verschleißbeständigkeit zu erhöhen und/oder zu verbessern.

Bei dieser alternativen Variante wird das Zwischenelement bewusst als Opferelement eingesetzt, das vor allen anderen Lagerbestandteilen verschleißen soll, während seines Gebrauchs aber besonders gute Gleiteigenschaften bieten soll. Nachdem das Zwischenelement seine Aufgabe erfüllt hat und bei guten Gleiteigenschaften seine Verschleißgrenze erreicht hat, kann es mit wenig Aufwand ausgewechselt und gegen ein neues Zwischenelement ausgetauscht werden, ohne dass hierzu eine Demontage des Querträgers und/oder seiner Lagerelemente erforderlich sein muss.

Weiterhin kann vorgesehen sein, dass der Innenring und/oder der Außenring der zumindest zwei Drehlager jeweils aus einem metallischen Material gebildet sind. Beispielsweise könnten der Innenring und/oder der Außenring aus Stahl, Edelstahl oder einem anderen geeigneten Material gebildet sein. Alternativ können der Innenring und der Außenring auch aus unterschiedlichen Materialien gebildet sein. Auch metallische Verbundmaterialien eignen sich als Innen- und/oder Außenring.

Weiterhin kann es vorgesehen sein, dass das zumindest eine Zwischenelement zumindest kreissegmentförmig ausgebildet ist, d.h. das zumindest eine Zwischenelement kann jeweils zumindest abschnittsweise zwischen dem Innenlager und dem Außenlager der zumindest zwei Drehlager angeordnet sein und als Verschleißelement fungieren.

Alternativ kann das zumindest eine Zwischenelement auch kreisförmig ausgebildet sein, d.h. das zumindest eine Zwischenelement kann vollständig zwischen Innenring und Außenring angeordnet sein.

Weiter kann es vorgesehen sein, dass das zumindest eine Zwischenelement jeweils dem Innenring und/oder dem Außenring der zumindest zwei Drehlager form-, stoff- und/oder kraftschlüssig zugeordnet ist. Insbesondere kann das zumindest eine Zwischenelement dem Innenring und/oder dem Außenring lösbar und/oder auswechselbar zugeordnet sein, so dass das zumindest eine Zwischenelement bei Verschleiß unkompliziert und schnell ausgetauscht und/oder gewechselt werden kann.

Gemäß einem Ausführungsbeispiel der Erfindung kann der Innenring an seiner Außenmantelfläche zumindest abschnittsweise eine Aussparung umfassen, in welche das zumindest eine Zwischenelement bündig eingesetzt ist bzw. einsetzbar ist. Die auf der Außenmantelfläche eingebrachte Aussparung kann insbesondere korrespondierend zum zumindest einen Zwischenelement ausgebildet sein. Da das zumindest eine Zwischenelement bündig in die zumindest eine Aussparung eingesetzt ist bzw. einsetzbar ist, kann das zumindest einen Zwischenelement einen Abschnitt bzw. ein Bestandteil der Außenmantelfläche des jeweiligen Innenrings der zumindest zwei Drehlager ausbilden.

Gemäß einem weiteren Ausführungsbeispiel der Erfindung kann der Außenring an seiner Innenmantelflächen zumindest abschnittsweise eine Aussparung umfassen, in welche das zumindest eine Zwischenelement bündig eingesetzt ist bzw. einsetzbar ist. Die auf der Außenmantelfläche eingebrachte Aussparung kann insbesondere korrespondierend zum zumindest einen Zwischenelement ausgebildet sein. Da das zumindest eine Zwischenelement bündig in die zumindest eine Aussparung eingesetzt ist bzw. einsetzbar ist, kann das zumindest einen Zwischenelement einen Abschnitt bzw. einen Bestandteil der Innenmantelfläche des jeweiligen Außenrings der zumindest zwei Drehlager ausbilden.

Alternativ kann das zumindest einen Zwischenelement dem Innenring und/oder dem Außenring der zumindest zwei Drehlager jeweils rastend bzw. verrastend zugeordnet sein, so dass vorzugsweise zwischen dem zumindest einen Zwischenelement und dem Innenring und/oder dem Außenring jeweils eine Rastverbindung ausgebildet ist.

Beispielsweise kann das zumindest eine Zwischenelement eine Aufnahme umfassen, in welche jeweils der Innenring der zumindest zwei Drehlager aufgenommen werden kann, d.h. das zumindest eine Zwischenelement kann jeweils auf die Außenmantelfläche des Innenrings aufgeklipst und/oder aufgesteckt werden. Alternativ kann der Innenring der zumindest zwei Drehlager jeweils an seinen Stirnseiten und/oder an seiner Außenmantelfläche Rastnasen umfassen, so dass das zumindest eine Zwischenelement mit den Rastnasen mit Außenmantelfläche des Innenrings verrasten kann. Alternativ kann der Außenring an seiner Innenmantelfläche Rastnasen umfassen, so dass das zumindest eine Zwischenelement der Innenmantelfläche des Außenrings verrastend zugeordnet ist.

Weiter kann es vorgesehen sein, dass das zumindest eine Zwischenelement einteilig oder mehrteilig ausgebildet ist, d.h. je nach Ausführungsform kann das zumindest eine Zwischenelement aus einem einzelnen Bauteil oder aus mehreren Bauteilen gebildet sein.

Weiter kann es vorgesehen sein, dass der Außenring aus zumindest zwei Ringsegmenten gebildet ist, welche insbesondere aneinander befestigbar und/oder koppelbar ausgebildet sind. Insbesondere können die zumindest zwei Ringsegmente lösbar aneinander befestigbar und/oder koppelbar ausgebildet sein.

Weiter kann es vorgesehen sein, dass die zumindest zwei Ringsegmente jeweils eine Aufnahme für den Innenring bereitstellen und/oder umfassen. Die Aufnahmen der zumindest zwei Ringsegmente können vorzugsweise korrespondierend zum Außendurchmesser des Innenrings ausgebildet sein, so dass der Innenring zumindest abschnittsweise von den zumindest zwei Ringsegmenten aufgenommen werden kann. Zusätzlich oder wahlweise können die Aufnahmen der zumindest zwei Ringsegmente jeweils vorzugsweise korrespondierend zu der Breite des Innenrings, insbesondere zu der Breite der Stirnseite des Innenrings, ausgebildet sein.

Weiter kann es vorgesehen sein, dass zumindest ein Ringsegment der zumindest zwei Ringsegmente zusätzlich eine weitere Aufnahme für das weitere Ringsegment der zumindest zwei Ringsegmente bereitstellt und/oder umfasst. Das zumindest eine Ringsegment der zumindest zwei Ringsegmente kann somit das weitere Ringsegment der zumindest zwei Ringsegmenten zumindest abschnittsweise aufnehmen.

Das zumindest eine Ringsegment der zumindest zwei Ringsegmente kann beispielsweise aus zumindest zwei weitgehend identisch ausgebildeten und zueinander beabstandet angeordneten Blechteilen ausgebildet sein. Die zumindest zwei zueinander beabstandet angeordneten Blechteile können jeweils im Bereich ihrer Enden eine Aufnahme für das zumindest eine weitere Ringsegment ausbilden. Die zumindest zwei zueinander beabstandet angeordneten Blechteile können beispielsweise mittels zumindest einen Zwischenelements verbunden sein, welches zumindest eine Zwischenelement die Innenmantelfläche des zumindest einen Ringsegments ausbildet.

Weiter kann es vorgesehen sein, dass das eine Ringsegment der zumindest zwei Ringsegmente an das weitere Ringsegment mittels Befestigungsmitteln gekoppelt ist bzw. koppelbar ist. Bei den Befestigungsmitteln kann es sich insbesondere um Schrauben oder dergleichen handeln. Die zumindest zwei Ringsegmente können jeweils wenigstens zwei Bohrungen umfassen, in welche jeweils zumindest zwei Schrauben eingesetzt werden können und/oder einsetzbar sind.

Bei Montage des zumindest einen Ringsegments der zumindest zwei Ringsegmente samt dem am zumindest einen Querträger zugeordneten Innenring an das weitere Ringsegment können die zumindest zwei Bohrungen der beiden Ringsegmente zumindest näherungsweise fluchtend und/oder deckungsgleich übereinander gelegt und/oder ausgerichtet werden, so dass jeweils ein Befestigungsmittel bspw. in Form einer Schraube in die zumindest zwei Bohrungen eingesetzt werden kann. Durch das Koppeln und/oder Befestigen des zumindest einen Ringsegments samt dem am zumindest einen Querträger zugeordneten Innenring an das weitere Ringsegment kann der Innenring axial gesichert werden; d.h. ein Verrutschen des zumindest einen Innenrings entlang der Längserstreckung des zumindest einen Querträgers kann durch die Montage des einen Ringsegments an das weitere Ringsegment vermieden werden.

Zur Erhöhung der Montagesicherheit können die zumindest zwei Ringsegmente jeweils zumindest vier Bohrungen oder mehrere Bohrungen umfassen, in welche jeweils die Befestigungsmittel einsetzbar sind und/oder eingesetzt werden können.

Durch die Verwendung von Befestigungsmitteln wie beispielsweise Schrauben oder dergleichen können die zumindest zwei Ringsegmente bei Wartungsarbeiten oder dergleichen ohne großen Zeitaufwand, schnell und unkompliziert demontiert und montiert werden. Auch kann damit das zumindest eine zwischen Innenring und Außenring angeordnete Zwischenelement ohne Demontage von großen Maschinenkomponenten ausgetauscht werden.

Gemäß einer Weiterbildung der Erfindung kann das weitere Ringsegment der zumindest zwei Ringsegmente Bestandteil des zumindest einen Längsträgers sein. Dies kann bedeuten, dass das weitere Ringsegment der zumindest zwei Ringsegmente in den Längsträger integriert sein kann. Dadurch können der Teileaufwand und schließlich auch die Kosten reduziert werden.

Gemäß einer weiteren Weiterbildung der Erfindung kann zumindest ein Ringsegment der zumindest zwei Ringsegmente an den Längsträger mittels weiteren Befestigungselementen befestigbar ausgebildet sein. Das zumindest eine Ringsegment kann weitere Bohrungen umfassen, in welche die weiteren Befestigungselemente durchgeführt werden können. Bei den weiteren Befestigungselementen kann es sich insbesondere um Schrauben oder dergleichen handeln.

Weiter kann es vorgesehen sein, dass die Verdrehbarkeit bzw. Rotation des Innenrings gegenüber dem Außenring durch das zumindest eine Zwischenelement begrenzt ist, d.h. die sich zwischen Innenring und Außenring einstellende Gleitreibung kann insbesondere vom zumindest einen Zwischenring aufgenommen werden.

Weiter kann zumindest ein Stellelement vorgesehen sein, welches zum zumindest teilweisen Verdrehen des zumindest einen Querträgers um seine Längsachse ausgebildet ist. Das zumindest eine Stellelement kann beispielweise mit dem Maschinenrahmen und dem zumindest einen Querträger verbunden sein.

Durch eine entsprechende Stellbewegung des zumindest einen Stellelements kann der zumindest eine Querträger um seine Längsachse verdreht werden. Dabei kann insbesondere die Arbeitstiefe der jeweils am zumindest einen Querträger angeordneten Bodenbearbeitungswerkzeuge eingestellt werden. Das zumindest eine Stellelement kann als hydraulisch, pneumatisch oder elektrisch arbeitende Zylinder ausgebildet sein.

Alternativ können zumindest zwei Stellelemente oder mehrere Stellelemente zum zumindest teilweisen Verdrehen des zumindest einen Querträgers um seine Längsachse vorgesehen sein, die jeweils beabstandet zueinander ausgebildet sind.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform einer landwirtschaftlichen Maschine, die sich in einer für die Feldfahrt vorgesehenen Arbeitsposition befindet.
Fig. 2A zeigt in einer schematischen Seitenansicht die Lagerung der zumindest zwei Querträger mit den daran angeordneten Bodenbearbeitungswerkzeugen gemäß der in Fig. 1 gezeigten landwirtschaftlichen Maschine.
Fig. 2B zeigt in einer Detailansicht die in den Figuren 1 und 2A gezeigte Drehlagerung der Querträger mit den daran angeordneten Bodenbearbeitungswerkzeugen, wobei es sich bei der Detailansicht um den in Figur 2A markierten Abschnitt B handelt.
Fig. 3 zeigt in einer Explosionsdarstellung den Aufbau der in den Figuren 1, 2A und 2B gezeigten Drehlagerung zur zumindest teilweisen Verdrehbarkeit der Querträger um ihre Längsachse.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

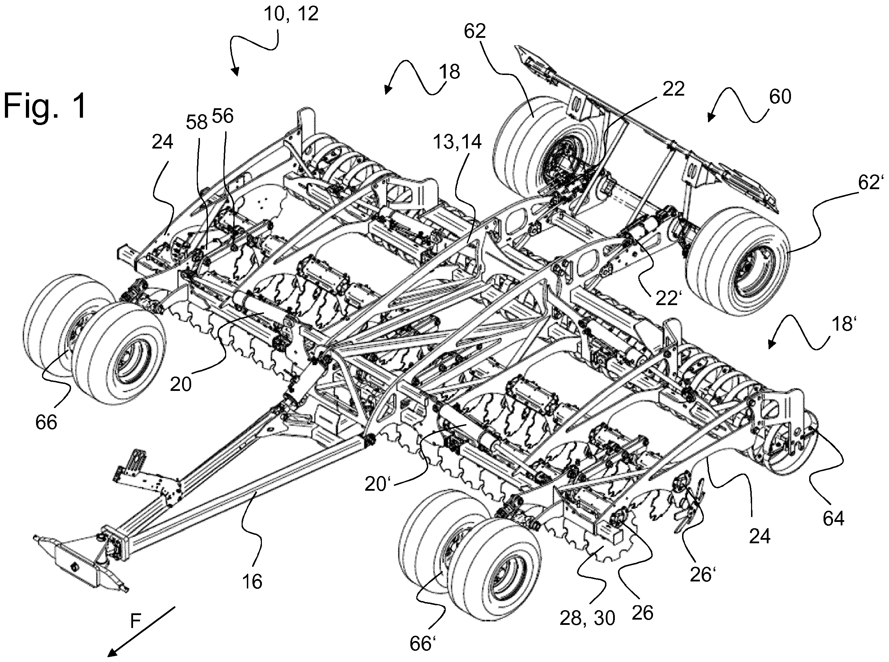

Die schematische Perspektivansicht der Fig. 1 zeigt eine Ausführungsvariante einer landwirtschaftlichen Maschine 10, die hier als Bodenbearbeitungsgerät 12 zur Bodenbearbeitung ausgestaltet ist. Das Bodenbearbeitungsgerät 12 umfasst einen Maschinenrahmen 13. Der Maschinenrahmen 13 umfasst einen Zentralrahmen bzw. einen Mittelrahmen 14 sowie zwei sich jeweils seitlich an den Mittelrahmen 14 anschließende Rahmenabschnitte 18 und 18'. Die beiden weitgehend symmetrisch aufgebauten Rahmenabschnitte 18 und 18' sind gegenüber dem Mittelrahmen 14 typischerweise um mindestens 90° verschwenkbar ausgebildet, um auf diese Weise die Maschine 10 für einen Straßentransport in ihrer Gesamtbreite reduzieren zu können. Zum Verschwenken der Rahmenabschnitte 18 und 18' gegenüber dem Mittelrahmen 14 sind Stellelemente 20, 20' beispielsweise in Form von elektrischen, pneumatischen oder hydraulischen Zylindern vorgesehen.

In der vorliegend beschriebenen Fig. 1 sind die Rahmenabschnitte 18, 18' gegenüber dem Mittelrahmen 14 in einer nicht verschwenkten Position dargestellt, sondern in einer weitgehenden horizontalen Lage dargestellt. Die zumindest weitgehend horizontale Lage der Rahmenabschnitte 18, 18' kann auch als Arbeitsposition der landwirtschaftlichen Maschine 10 definiert sein. Bei einer (hier nicht dargestellten) Transportposition der Rahmenabschnitte 18, 18' um circa 90° gegenüber dem Mittelrahmen 14 handelt es sich um eine Transportposition der landwirtschaftlichen Maschine 10. Die Transportposition der landwirtschaftlichen Maschine 10 ist erforderlich, damit die für eine auf öffentlichen Straßen zulässige Breite der landwirtschaftlichen Maschine 10 bzw. des Bodenbearbeitungsgeräts 12 eingehalten werden kann.

Am Mittelrahmen 14 ist vorderseitig in Fahrtrichtung F eine Zugdeichsel 16 vorgesehen, mittels welcher die landwirtschaftliche Maschine 10 an ein hier nicht dargestelltes Zugfahrzeug angehängt und/oder gekoppelt werden kann. Insbesondere handelt es sich vorliegend um ein gezogenes landwirtschaftliches Bodenbearbeitungsgerät 12.

Der Maschinenrahmen 13, insbesondere der Mittelrahmen 14, umfasst weiter ein in Fahrtrichtung F gesehen rückseitig angeordnetes Fahrwerk 60, welches Räder 62, 62' umfasst. Das Fahrwerk 60 ist gegenüber dem Maschinenrahmen 13 bzw. gegenüber dem Mittelrahmen 14 um eine horizontale und quer zur Fahrtrichtung F liegende Schwenkachse (hier nicht gesondert gekennzeichnet) verschwenkbar ausgebildet, wobei das Fahrwerk 60 insbesondere in der Arbeitsposition der landwirtschaftlichen Maschine 10 angehoben und in einer Transportposition der landwirtschaftlichen Maschine 10 abgesenkt ist. Das Verschwenken des Fahrwerks 60 gegenüber dem Maschinenrahmen 13 erfolgt mittels entsprechender weiterer Stellelemente 22, 22' in Form von hydraulischen, elektrischen oder pneumatischen Zylindern.

An den Rahmenabschnitten 18, 18' sind jeweils vorderseitig Stützräder 66, 66' angeordnet, welche ebenfalls verschwenkbar gelagert sind.

Der Maschinenrahmen 14 bzw. die Rahmenabschnitte 18, 18' weisen in Fahrtrichtung F gesehen jeweils zumindest zwei Längsträger 24 auf, an welchen quer zur Fahrtrichtung F des Bodenbearbeitungsgeräts 12 zumindest zwei Querträger 26 und 26' gelagert sind. Die zumindest zwei Querträger 26, 26' sind insbesondere in Fahrtrichtung F hintereinander und zumindest annähernd parallel zueinander angeordnet. Insbesondere sind die zumindest zwei Querträger 26, 26' jeweils zumindest teilweise um ihre Längsachse mittels zumindest zwei zueinander beabstandeten Drehlagern 32, 32' an dem Längsträger 24 verdrehbar gelagert. Bei den zumindest zwei Querträgern 26, 26' handelt es sich im gezeigten Ausführungsbeispiel jeweils um Rohre mit einem quadratischen Querschnitt.

An den zumindest zwei Querträgern 26, 26' sind jeweils Bodenbearbeitungswerkzeuge 28 bspw. in Form von Schneidscheiben 30 mittels nicht dargestellter Aufhängungsvorrichtungen bzw. elastischer Lagereinheiten gelagert. Die Schneidscheiben 30 sind in Fahrtrichtung F hintereinander, jedoch in Fahrtrichtung F versetzt zueinander an den zumindest zwei Querträgern 26, 26' gelagert. Die Schneidscheiben 30 dienen insbesondere dazu, den zu bearbeitenden Boden (hier nicht dargestellt) zu lockern.

Den zumindest zwei Querträgern 26, 26' folgt in Fahrtrichtung F der landwirtschaftlichen Maschine 10 eine Packerwalze 64 zur Rückverfestigung des zuvor mittels der Schneidscheiben 30 gelockerten Bodens.

Die zumindest zwei Querträger 26, 26' sind darüber hinaus mittels einer Gelenkanordnung 56 miteinander verbunden, welche Gelenkanordnung 56 parallel zum Längsträger 24 beabstandet angeordnet ist. Parallel zur Gelenkanordnung 56 ist ein Stellelement in Form eines Hydraulikzylinders 58 vorgesehen, welcher mit der Gelenkanordnung 56 und dem Maschinenrahmen 13 in Verbindung steht. Eine Stellbewegung des Hydraulikzylinders 58 bewirkt eine Rotation der zumindest zwei Querträger 26, 26' jeweils um ihre Längsachse, wodurch jeweils die Arbeitstiefe der an den zumindest zwei Querträgern 26, 26' angeordneten Bodenbearbeitungswerkzeugen 28 eingestellt werden kann bzw. einstellbar ist.

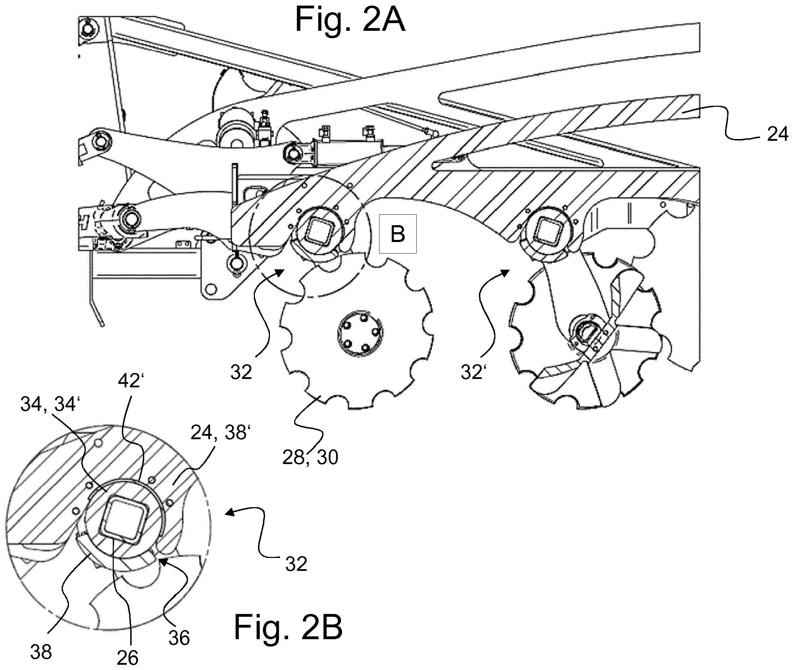

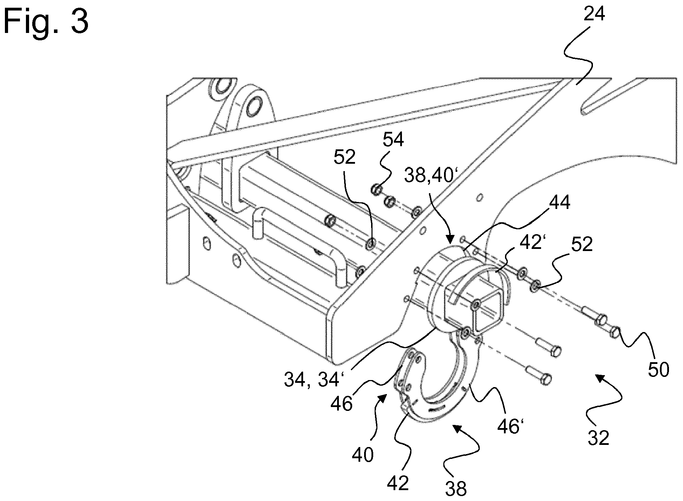

Während die Figuren 2A und 2B die Drehlagerung der zumindest zwei Querträgern 26, 26' mittels der Drehlager 32, 32' in einer Seitenansicht zeigen, ist in der Fig. 3 der Aufbau der Drehlager 32 und 32' in einer Explosionsdarstellung dargestellt.

Jedes Drehlager 32, 32' umfasst jeweils mindestens einen dem Querträger 26, 26' zugeordneten Innenring 34. Der Innenring 34 umfasst jeweils eine Durchtrittsöffnung, welche korrespondierend zur Außenmantelfläche des jeweiligen Querträgers 26, 26' ausgebildet ist. D.h. gemäß vorliegender Ausführungsform ist die Durchtrittsöffnung des Innenrings 34 quadratisch ausgebildet. Demzufolge ist der Innenring 26 auf dem Querträger 26, 26' unverdrehbar aufgesteckt bzw. der jeweilige Querträger 26, 26' ist zumindest abschnittsweise vom Innenring 34 aufgenommen. Neben dieser durch die Konturen der Durchtrittsöffnung des Innenrings 34 und der Außenkontur des Querträgers 26, 26' vorgegebenen Formschlussverbindung kann zusätzliche eine stoffliche Verbindung hergestellt werden, bspw. durch ein Verschweißen des Innenrings 34 auf dem Querträger 26, 26'.

Wahlweise kann der Innenring 34 auch durch mehrere Innenringsegmente 34' gebildet sein, bspw. durch zwei etwa gleichgroße Innenringsegmente 34', die in etwa halbkreisförmig sind und zu beiden Seiten des Querträgers 26, 26' an diesen angefügt und bspw. dort verschweißt werden können. Auch kann der Innenring 34 wahlweise durch drei oder mehr einzelne Innenringsegmente 34' gebildet sein, die erst im zusammengefügten Zustand den kompletten Innenring 34 bilden. Eine solche - hier in den Figuren 1 bis 3 nicht näher verdeutlichte - alternative Ausführungsvariante kann bspw. aus Montagegründen sinnvoll sein, etwa wenn ohne Demontage des Querträgers 26, 26' von der Maschine 10 ein verschlissener Innenring 34 entfernt und durch entsprechend gestaltete Innenringsegmente 34', die nach der Montage (insbesondere durch Verschweißen am Querträger) einen kompletten Innenring 34 bilden können, ersetzt werden soll.

Das Drehlager 32, 32' umfasst neben dem Innenring 34 bzw. den Innenringsegmenten 34' jeweils einen zweiteilig ausgebildeten Außenring 36, welcher hier aus zwei Ringsegmenten 38, 38' gebildet ist. Zumindest ein Ringsegment 38 der zumindest zwei Ringsegmenten 38, 38' bildet ein separates Bauteil aus, während das weitere Ringsegment 38' der zumindest zwei Ringsegmenten 38, 38' einen integralen Bestandteil des Längsträgers 24 bildet bzw. in den Längsträger 24 integriert ist.

Die zumindest zwei Ringsegmente 38, 38' umfassen jeweils eine Aufnahme 40, 40' für den Innenring 34, so dass der Innenring 34 von den Aufnahmen 40, 40' der zumindest zwei Ringsegmente 38, 38' zumindest abschnittsweise aufgenommen wird.

Da der Innenring 34 und der Außenring 36 gegeneinander verdrehbar ausgebildet sind, neigen die Kontaktflächen zwischen Innenring 34 und Außenring 36 aufgrund ihrer Gestaltung als Gleitlagerflächen zu einem ausgeprägten Verschleiß. Damit der Verschleiß zwischen den Innenring 34 und dem Außenring 36 reduziert wird, ist zwischen Innenring 34 und Außenring 36 zumindest ein erstes und ein zweites Zwischenelement 42, 42' angeordnet.

Das erste und das zweite Zwischenelement 42, 42' sind jeweils einteilig und insbesondere kreissegmentförmig ausgebildet, wobei deren Innenradius jeweils korrespondierend zur Außenmantelfläche bzw. zum Außenradius des Innenrings 34 ausgebildet ist.

Das zumindest eine Ringsegment 38 der zumindest zwei Ringsegmenten 38, 38' ist aus zumindest zwei identisch ausgebildeten und zueinander beabstandet angeordneten Blechteilen 46, 46' gebildet. Zwischen den weitgehend identisch ausgebildeten Blechteilen 46, 46' ist das erste Zwischenelement 42 angeordnet, welches den Abstand zwischen den zumindest zwei identisch ausgebildeten Blechteilen 46, 46' vorgibt. Das zumindest eine erste Zwischenelement 42 bildet damit die Innenmantelfläche des zumindest einen Ringsegments 38 aus. Das zumindest eine erste Zwischenelement 42 steht jeweils mit den Innenflächen der zumindest zwei zueinander beabstandeten Blechteilen 46, 46' in Oberflächenkontakt und ist an diesen beispielsweise mittels hier nicht dargestellter Schraubverbindungen befestigt.

Das weitere Ringsegment 38' der zumindest zwei Ringsegmente 38, 38', welches einen Bestandteil des Längsträgers 24 ausbildet, umfasst eine Aussparung 44, in welche das zumindest eine zweite Zwischenelement 42' bündig eingesetzt ist, d.h. das zweite Zwischenelement 42' ist dem Außenring 36 formschlüssig zugeordnet. Insbesondere verrastet das zumindest eine zweite Zwischenelement 42' mit der Aussparung 44 des weiteren Ringsegments 38'. Das zweite Zwischenelement 42' bildet damit einen Bestandteil der Innenmantelfläche des weiteren Ringsegments 38' aus.

Wie bereits erläutert, umfassen die zumindest zwei Ringsegmente 38, 38' jeweils eine Aufnahme 40, 40' für den Innenring, d.h. der den jeweiligen Querträgern 26, 26' unverdrehbar aufgesteckte bzw. aufgeschobene Innenring 34 wird von den zumindest zwei Ringsegmenten 38, 38' zumindest bereichsweise aufgenommen. Der Innenring 34 wird dabei derart von der Aufnahme 40' des weiteren Ringsegments 38' aufgenommen, so dass der Innenring 34 in Oberflächenkontakt mit der Innenmantelfläche des weiteren Ringsegments 38' tritt bzw. steht, wobei die Innenmantelfläche des zumindest einen weiteren Ringsegments 38' zumindest bereichsweise durch das zumindest eine zweite Zwischenelement 42' gebildet ist.

Darüber hinaus wird der Innenring 34 derart von der Aufnahme 40 des zumindest einen Ringsegments 38 aufgenommen, so dass dieser in Oberflächenkontakt mit der durch das zumindest eine erste Zwischenelement 42 gebildete Innenmantelfläche des zumindest einen Ringsegments 38 tritt. Zugleich wird der Innenring 34 von den zumindest zueinander beabstandeten Blechteilen 46, 46' zumindest abschnittsweise aufgenommen.

Die Aufnahme 40 des zumindest einen Ringsegments 38 ist darüber hinaus auch dazu ausgebildet, das weitere Ringsegment 38' der zumindest zwei Ringsegmente 38, 38' aufzunehmen, d.h. bei Montage des zumindest einen Ringsegments 38 und des jeweiligen Querträgers 26, 26' mit dem daran angeordneten Innenring 34 an das weitere Ringsegment 38' wird bzw. ist die das zumindest eine weitere Ringsegment 38' jeweils zwischen den zumindest zwei zueinander beabstandeten Blechteilen 46, 46' angeordnet. Somit liegen die zumindest zwei zueinander beabstandete Blechteile 46, 46' jeweils auf beiden Stirnseiten des zumindest einen weiteren Ringsegments 38' und stehen damit in Oberflächenkontakt.

Das zumindest eine Ringelement 38 und das zumindest eine weitere Ringelement 38' umfassen jeweils vier Bohrungen 48, welche jeweils bei Montage des zumindest einen Ringsegments 38 und des jeweiligen Querträgers 26, 26' mit dem daran angeordneten Innenring 34 an das weitere Ringsegment 38' zumindest näherungsweise fluchtend übereinanderliegen und/oder zueinander ausgerichtet sein sollen. Die Befestigung des zumindest einen Ringsegments 38 am weiteren Ringsegments 38' erfolgt mittels Schrauben 50, welches jeweils durch die zumindest näherungsweise fluchtend zueinander ausgerichteten Bohrungen 48 eingesetzt.

Zusätzlich ist auf den Schrauben 50 jeweils zwei Unterlegscheiben 52 vorgesehen und/oder angeordnet, die jeweils an beiden Stirnseiten des weiteren Ringsegments 38' anliegen. Die Unterlegscheiben 52 können jeweils aus Metall oder aus Kunststoff gebildet sein. Zur Fixierung der jeweils durch die Bohrungen 48 geführten Schrauben 50 ist jeweils an dessen freien Ende eine Mutter 54 vorgesehen. Die Schraubverbindungen ermöglichen eine einfache und leichte Zugänglichkeit zur Drehlagerung, so dass das jeweilige Drehlager 32, 32' insbesondere bei Wartungsarbeiten schnell und unkompliziert demontiert sowie montiert werden kann.

Aufgrund des in den Figuren 2A, 2B und 3 dargestellten Drehlagers 32 wird deutlich, dass durch eine Stellbewegung der Hydraulikzylinder 58 eine Rotation des jeweiligen Querträgers 26, 26' bewirkt wird, wodurch jeweils die Arbeitstiefe der an den zumindest zwei Querträgern 26, 26' angeordneten Bodenbearbeitungswerkzeugen 28 eingestellt werden kann. Insbesondere sind dabei der Innenring 34 und der Außenring 36 zueinander verdrehbar ausgebildet, wobei die Verdrehbarkeit insbesondere durch das zumindest eine erste Zwischenelement 42 und das zumindest eine zweite Zwischenelement 42' begrenzt wird.

Die Erfindung wurde unter Bezugnahme auf eine bevorzugte Ausführungsform beschrieben.

### Bezugszeichenliste

- 10: Landwirtschaftliche Maschine
- 12: Bodenbearbeitungsgerät
- 13: Maschinenrahmen
- 14: Zentralrahmen; Mittelrahmen
- 16: Zugdeichsel
- 18: Rahmenabschnitt
- 18': Rahmenabschnitt
- 20: Stellelement
- 20': Stellelement
- 22: Weiteres Stellelement
- 22': Weiteres Stellelement
- 24: Längsträger
- 26: Querträger
- 26': Querträger
- 28: Bodenbearbeitungswerkezug
- 30: Schneidscheibe
- 32: Drehlager
- 32': Drehlager
- 34: Innenring
- 34': Innenringsegment
- 36: Außenring
- 38: ein Ringsegment
- 38': weiteres Ringsegment
- 40: Aufnahme
- 40': Aufnahme
- 42: erstes Zwischenelement
- 42': zweites Zwischenelement
- 44: Aussparung
- 46: Blechteil
- 46': Blechteil
- 48: Bohrung
- 50: Schrauben
- 52: Unterlegscheibe
- 54: Mutter
- 56: Gelenkanordnung
- 58: Hydraulikzylinder
- 60: Fahrwerk
- 62: Rad
- 62`: Rad
- 64: Packerwalze
- 66: Stützrad
- 66': Stützrad

- F: Fahrtrichtung

## Patentansprüche

1. Landwirtschaftliche Maschine (10) zur Bodenbearbeitung, zumindest umfassend:
- wenigstens zwei einem Maschinenrahmen (12) zugeordnete oder einen Teil dieses Maschinenrahmens (12) bildende Längsträger (24)
- sowie wenigstens einen zwischen den Längsträgern (24) angeordneten und mit diesen jeweils verbundenen oder dort gelagerten, in etwa quer zu einer Fahrtrichtung (F) der landwirtschaftlichen Maschine (10) angeordneten Querträger (26, 26')
- mit am wenigstens einen Querträger (26, 26') befestigten und/oder gelagerten Bodenbearbeitungswerkzeugen (28),
wobei der wenigstens eine quer zu einer Fahrtrichtung (F) der landwirtschaftlichen Maschine (10) angeordnete Querträger (26, 26') über wenigstens zwei voneinander beabstandete Drehlager (32, 32') an den Längsträgern (24) um eine Längsachse des Querträgers (26, 26') verdrehbar gelagert ist, und
wobei die wenigstens zwei Drehlager (32, 32') jeweils zumindest einen dem Querträger (26, 26') zugeordneten Innenring (34) oder mindestens ein dem Querträger (26, 26') zugeordnetes Innenringsegment (34') und einen dem jeweiligen Längsträger (24) zugeordneten ein- oder mehrteilig ausgebildeten Außenring (36) oder mindestens ein dem jeweiligen Längsträger (24) zugeordnetes Außenringsegment (38, 38') umfassen, wobei der Innenring (34) oder das Innenringsegment (34') und der Außenring (36) oder das Außenringsegment (38, 38') zueinander rotierbar ausgebildet sind,
**dadurch gekennzeichnet, dass** zwischen dem Innenring (34) oder wenigstens einen Innenringsegment (34') und dem Außenring (36) oder wenigstens einen Außenringsegment (38, 38') wenigstens ein lasttragendes und ein Bestandteil des Drehlagers (32, 32') bildendes Zwischenelement (42) vorgesehen und/oder angeordnet ist, das vom Drehlager (32, 32') trennbar und/oder auswechselbar ausgebildet ist.

2. Landwirtschaftliche Maschine nach Anspruch 1, bei der das mindestens eine Zwischenelement (42) durch wenigstens ein streifenartiges Ringsegment gebildet ist, das zwischen dem Innenring (34) oder wenigstens einen Innenringsegment (34') und dem Außenring (36) oder wenigstens einen Außenringsegment (38, 38') auswechselbar und/oder entnehmbar eingefügt ist.

3. Landwirtschaftliche Maschine nach Anspruch 1 oder 2, bei welcher das zumindest eine Zwischenelement (42) aus einem Kunststoff- oder Verbundmaterial oder aus einem metallischen Material mit gegenüber zumindest dem Innenring (34) oder dem Außenring (36) erhöhter Verschleiß- und/oder Abriebfestigkeit gebildet ist.

4. Landwirtschaftliche Maschine nach einem der Ansprüche 1 bis 3, bei welcher das zumindest eine Zwischenelement (42) dem Innenring (34) und/oder dem Außenring (36) form-, stoff- und/oder kraftschlüssig zugeordnet ist.

5. Landwirtschaftliche Maschine nach einem der Ansprüche 1 bis 4, bei welcher der Innenring (34) an seiner Außenmantelfläche zumindest abschnittsweise eine Aussparung umfasst, in welche das zumindest eine Zwischenelement (42) bündig eingesetzt ist bzw. einsetzbar ist.

6. Landwirtschaftliche Maschine nach einem der Ansprüche 1 bis 5, bei welcher der Außenring (36) an seiner Innenmantelfläche zumindest bereichsweise eine Aussparung (44) umfasst, in welche das zumindest eine Zwischenelement (42) bündig eingesetzt ist bzw. einsetzbar ist.

7. Landwirtschaftliche Maschine nach einem der vorherigen Ansprüche, bei welcher das zumindest eine Zwischenelement (42) zumindest kreissegmentförmig oder kreisförmig ausgebildet ist.

8. Landwirtschaftliche Maschine nach Anspruch 1, bei welcher das zumindest eine Zwischenelement (42) einteilig oder mehrteilig ausgebildet ist.

9. Landwirtschaftliche Maschine nach einem der vorherigen Ansprüche, bei welcher der Außenring (36) aus zumindest zwei Ringsegmenten (38, 38') gebildet ist, welche aneinander koppelbar ausgebildet sind.

10. Landwirtschaftliche Maschine nach Anspruch 9, bei welcher die zumindest zwei Ringsegmente (38, 38') jeweils eine Aufnahme für den Innenring (34) bereitstellen und/oder umfassen.

11. Landwirtschaftliche Maschine nach Anspruch 9 oder 10, bei welcher ein Ringsegment (38) der zumindest zwei Ringsegmente (38, 38') zusätzlich eine Aufnahme für das weitere Ringsegment (38') der zumindest zwei Ringsegmente (38, 38') umfasst.

12. Landwirtschaftliche Maschine nach einem der Ansprüche 9 bis 11, bei welcher ein Ringsegment (38) der zumindest zwei Ringsegmente (38, 38') an den Längsträger (24) mittels Befestigungselementen befestigbar ist.

13. Landwirtschaftliche Maschine nach einem der Ansprüche 9 bis 12, bei welchem das weitere Ringsegment (38') der zumindest zwei Ringsegmente (38, 38') Bestandteil des Längsträgers (24) ist und/oder in den Längsträger (24) integriert ist.

14. Landwirtschaftliche Maschine nach einem der vorherigen Ansprüche, bei welcher die Rotation des Innenrings (34) gegenüber dem Außenring (36) durch das zumindest eine Zwischenelement (42) begrenzt ist.

## Claims

1. An agricultural machine (10) for soil cultivation, at least comprising:
- at least two longitudinal beams (24) assigned to a machine frame (12) or forming a part of this machine frame (12),
- as well as at least one crossbeam (26, 26') arranged between the longitudinal beams (24) and in each case connected with these longitudinal beams (24) or mounted thereat, and arranged approximately transverse to a driving direction (F) of the agricultural machine (10)
- with soil-working implements (28) attached and/or mounted to the at least one crossbeam (26, 26'),
wherein the at least one crossbeam (26, 26') arranged transverse to a driving direction (F) of the agricultural machine (10) is mounted to the longitudinal beams (24) to be rotatable about a longitudinal axis of the crossbeam (26, 26') via at least two pivot bearings (32, 32'), which are spaced apart from each other, and
wherein the at least two pivot bearings (32, 32') each comprise at least one inner ring (34) assigned to the crossbeam (26, 26') or at least one inner ring segment (34') assigned to the crossbeam (26, 26') and an outer ring (36) formed in one or more pieces and assigned to the particular longitudinal beam (24) or at least one outer ring segment (38, 38') assigned to the particular longitudinal beam (24), wherein the inner ring (34) or the inner ring segment (34') and the outer ring (36) or the outer ring segment (38, 38') are designed to be rotatable in relation to each other,
**characterised in that** at least one load-bearing intermediate element (42), which forms a part of the pivot bearing (32, 32'), is provided and/or arranged between the inner ring (34) or the at least one inner ring segment (34') and the outer ring (36) or the at least one outer ring segment (38, 38'), the intermediate element (42) being designed to be exchangeable and/or separable from the pivot bearing (32, 32').

2. The agricultural machine according to claim 1, in which the at least one intermediate element (42) is formed by at least one strip-type ring segment, which is exchangeably and/or removably inserted between the inner ring (34) or the at least one inner ring segment (34') and the outer ring (36) or the at least one outer ring segment (38, 38').

3. The agricultural machine according to claim 1 or 2, in which the at least one intermediate element (42) is formed from a plastic or a composite material or from a metal material with a wear resistance and/or abrasion resistance that is increased in relation to at least the inner ring (34) or the outer ring (36).

4. The agricultural machine according to one of the claims 1 to 3, in which the at least one intermediate element (42) is assigned to the inner ring (34) and/or to the outer ring (36) in a form-fit, material-bonded, and/or force-locking manner.

5. The agricultural machine according to one of the claims 1 to 4, in which the inner ring (34) comprises a recess at least in sections of its outer lateral surface, into which recess the at least one intermediate element (42) is inserted or insertable in a flush manner.

6. The agricultural machine according to one of the claims 1 to 5, in which the outer ring (36) comprises a recess (44) at least in some areas of its inner lateral surface, into which recess (44) the at least one intermediate element (42) is inserted or insertable in a flush manner.

7. The agricultural machine according to one of the previous claims, in which the at least one intermediate element (42) is designed in the form of a circle segment or of a circle.

8. The agricultural machine according to claim 1, in which the at least one intermediate element (42) is designed in one piece or in more pieces.

9. The agricultural machine according to one of the previous claims, in which the outer ring (36) is formed from at least two ring segments (38, 38'), which are designed to be coupleable to each other.

10. The agricultural machine according to claim 9, in which the at least two ring segments (38, 38') each provide and/or comprise a reception for the inner ring (34).

11. The agricultural machine according to claim 9 or 10, in which a ring segment (38) of the at least two ring segments (38, 38') additionally comprises a reception for the further ring segment (38') of the at least two ring segments (38, 38').

12. The agricultural machine according to one of the claims 9 to 11, in which a ring segment (38) of the at least two ring segments (38, 38') is attachable by means of attachment elements to the longitudinal beam (24).

13. The agricultural machine according to one of the claims 9 to 12, in which the further ring segment (38') of the at least two ring segments (38, 38') is a part of the longitudinal beam (24) and/or integrated into the longitudinal beam (24).

14. The agricultural machine according to one of the previous claims, in which the rotation of the inner ring (34) in relation to the outer ring (36) is limited by the at least one intermediate element (42).

## Revendications

1. Machine agricole (10) destinée à travailler le sol, comprenant du moins:
- au moins deux longerons (24) associés à un bâti de machine (12) ou formant une partie de ce bâti de machine (12),
- ainsi qu'au moins une traverse (26, 26') qui est disposée entre les longerons (24) et est reliée respectivement à ceux-ci ou y supportée et est disposée à peu près transversalement à une direction de déplacement (F) de la machine agricole (10)
- avec des outils à travailler le sol (28) qui sont fixés et/ou supportés sur ladite au moins une traverse (26, 26'),
dans lequel ladite au moins une traverse (26, 26') disposée transversalement à une direction de déplacement (F) de la machine agricole (10) est supportée sur les longerons (24) par le biais d'au moins deux paliers rotatifs (32, 32') espacés les uns des autres, de manière à pouvoir tourner autour d'un axe longitudinal de la traverse (26, 26'), et
dans lequel lesdits au moins deux paliers rotatifs (32, 32') comprennent chacun au moins une bague intérieure (34) associée à la traverse (26, 26') ou au moins un segment de bague intérieure (34') associé à la traverse (26, 26') ainsi qu'une bague extérieure (36) à une ou plusieurs parties qui est associée au longeron (24) respectif ou au moins un segment de bague extérieure (38, 38') associé au longeron (24) respectif, dans lequel la bague intérieure (34) ou le segment de bague intérieure (34') et la bague extérieure (36) ou le segment de bague extérieure (38, 38') sont conçus de manière à pouvoir tourner l'un(e) par rapport à l'autre,
**caractérisée par le fait qu'**entre la bague intérieure (34) ou ledit au moins un segment de bague intérieure (34') et la bague extérieure (36) ou ledit au moins un segment de bague extérieure (38, 38') est prévu et/ou agencé au moins un élément intermédiaire (42) porteur de charge et formant un composant du palier rotatif (32, 32'), qui est conçu de manière à pouvoir être séparé du palier rotatif (32, 32') et/ou à être échangeable.

2. Machine agricole selon la revendication 1, dans laquelle ledit au moins un élément intermédiaire (42) est formé par au moins un segment de bague de type bande qui est inséré entre la bague intérieure (34) ou ledit au moins un segment de bague intérieure (34 ') et la bague extérieure (36) ou ledit au moins un segment de bague extérieure (38, 38') de manière à pouvoir être échangé et/ou retiré.

3. Machine agricole selon la revendication 1 ou 2, dans laquelle ledit au moins un élément intermédiaire (42) est réalisé en une matière plastique ou un matériau composite ou en un matériau métallique présentant une résistance accrue à l'usure et/ou à l'abrasion par rapport au moins à la bague intérieure (34) ou à la bague extérieure (36).

4. Machine agricole selon l'une quelconque des revendications 1 à 3, dans laquelle ledit au moins un élément intermédiaire (42) est associé à engagement positif, par liaison de matière et/ou par liaison de force à la bague intérieure (34) et/ou à la bague extérieure (36).

5. Machine agricole selon l'une quelconque des revendications 1 à 4, dans laquelle la bague intérieure (34) comprend au moins par sections un évidement sur sa surface latérale extérieure, dans lequel ledit au moins un élément intermédiaire (42) est inséré ou bien peut être inséré à fleur.

6. Machine agricole selon l'une quelconque des revendications 1 à 5, dans laquelle la bague extérieure (36) comprend au moins par zones un évidement (44) sur sa surface latérale intérieure, dans lequel ledit au moins un élément intermédiaire (42) est inséré ou bien peut être inséré à fleur.

7. Machine agricole selon l'une quelconque des revendications précédentes, dans laquelle ledit au moins un élément intermédiaire (42) est conçu au moins en forme de segment de cercle ou en forme de cercle.

8. Machine agricole selon la revendication 1, dans laquelle ledit au moins un élément intermédiaire (42) est conçu en une seule partie ou en plusieurs parties.

9. Machine agricole selon l'une quelconque des revendications précédentes, dans laquelle la bague extérieure (36) est formée à partir d'au moins deux segments de bague (38, 38') qui sont conçus de manière à pouvoir couplés les uns aux autres.

10. Machine agricole selon la revendication 9, dans laquelle lesdits au moins deux segments de bague (38, 38') fournissent et/ou comprennent chacun un logement pour la bague intérieure (34).

11. Machine agricole selon la revendication 9 ou 10, dans laquelle un segment de bague (38) desdits au moins deux segments de bague (38, 38') comprend en outre un logement pour l'autre segment de bague (38') desdits au moins deux segments de bague (38, 38').

12. Machine agricole selon l'une quelconque des revendications 9 à 11, dans laquelle un segment de bague (38) desdits au moins deux segments de bague (38, 38') peut être fixé au longeron (24) au moyen d'éléments de fixation.

13. Machine agricole selon l'une quelconque des revendications 9 à 12, dans laquelle ledit autre segment de bague (38') desdits au moins deux segments de bague (38, 38') fait partie du longeron (24) et/ou est intégré au longeron (24).

14. Machine agricole selon l'une quelconque des revendications précédentes, dans laquelle la rotation de la bague intérieure (34) par rapport à la bague extérieure (36) est limitée par ledit au moins un élément intermédiaire (42).
